# EUROPEAN PATENT SPECIFICATION

(11) **EP 4 310 507 B1**
(45) Date of publication and mention of the grant of the patent: **12.08.2026**
(21) Application number: 22770988.8
(22) Date of filing: 16.02.2022
(51) Int. Cl.: G01N 35/04, G01H 7/00, G01N 21/59, G01N 35/10

(54) **AUTOMATIC ANALYZER**
AUTOMATISCHE ANALYSEVORRICHTUNG
DISPOSITIF D'ANALYSE AUTOMATIQUE

(30) Priority: 15.03.2021 JP 2021041142
(43) Date of publication of application: 24.01.2024
(73) Proprietor: HITACHI HIGH-TECH CORPORATION, Tokyo 105-6409 (JP)
(72) Inventor: SATO, Rei, Tokyo 105-6409 (JP); INABE, Toshiyuki, Tokyo 105-6409 (JP)
(74) Representative: Strehl & Partner mbB
(86) International application number: PCT/JP2022/006170
(87) International publication number: WO 2022/196229

(56) References cited:
- WO-A1-99/02993
- JP-A- 2004 170 152
- JP-A- 2008 089 427
- JP-A- 2012 202 789
- JP-A- 2017 133 970
- JP-A- 2017 133 970

## Description

### Technical Field

The present invention relates to an automatic analyzer.

### Background Art

An automatic analyzer includes a plurality of mechanisms handling fluids, including a dispensing mechanism for dispensing a sample or a reagent, and a cleaning mechanism for cleaning a used dispensing mechanism or a used reaction container to be usable for subsequent analysis. Such mechanisms are connected to each other by channels. Maintaining a state in the channel to be normal leads to maintaining normal dispensing accuracy of the dispensing mechanism and normal cleaning performance of the cleaning mechanism, resulting in highly accurate analysis results.

Monitoring the state in each channel of the automatic analyzer and determining presence or absence of abnormality is therefore a technique required to ensure accuracy of analysis results. In the past, an optical digital sensor is provided individually for each of a plurality of channels to be monitored, to detect any abnormality (bubble, impurity, liquid shortage, etc.) in the channel. In this method, since one sensor must be provided for each channel, complication of the analyzer may be caused due to increased number of components. Such complication of the analyzer leads to increased costs and increased probability of failure.

On the other hand, Patent Literature 1 discloses a technique of inspecting a plurality of channels using a single optical sensor for detecting a foreign substance in a liquid flowing through each channel.

The document JP 2017 133970 A discloses an automated analyzer according to the preamble of claim 1. A further related automated analyzer is disclosed in the document JP 2004170152 A.

### Citation List

### Patent Literature

PTL 1: Japanese Unexamined Patent Application Publication (Translation of PCT Application) No. 2014-535051.

### Summary of Invention

### Technical Problem

However, the above-described Patent Literature 1 does not disclose a technique of specifying which of the channels has an abnormality.

An object of the present invention is to provide an automatic analyzer capable of individually identifying a channel in which an abnormality has occurred while suppressing complication of the analyzer.

### Solution to Problem

In order to solve the above problem, the invention proposes an automatic analyzer according to claim 1. The automatic analyzer comprises: a channel through which liquid flows; a sensor that monitors the channel; and a control unit that determines abnormality in the liquid flowing through the channel based on measurement results of the sensor. In the automatic analyzer, the sensor monitors, as monitoring objects, the plurality of channels having different properties, and the control unit determines in which of the channels an abnormality has occurred based on analogue monitoring data continuously measured by the sensor during monitoring and analogue reference data continuously measured by the sensor before monitoring.

### Advantageous Effects of Invention

According to the present invention, it is possible to provide an automatic analyzer capable of individually identifying a channel in which an abnormality has occurred while suppressing complication of the analyzer.

### Brief Description of Drawings

Fig. 1 illustrates a basic configuration of an automatic analyzer according to the present embodiment.
Fig. 2 illustrates a configuration when an ultrasonic sensor is used as a channel sensor.
Fig. 3 is a schematic diagram of analog waveforms obtained when an ultrasonic sensor is attached to two types of channels having different diameters.
Fig. 4 is a schematic diagram of analog waveforms obtained when an ultrasonic sensor is attached to two types of channels including different materials.
Fig. 5 includes block diagrams of a channel sensor and a control unit according to the present embodiment.
Fig. 6 is a flowchart illustrating a method for determining an abnormality in a channel to be monitored according to the present embodiment.
Fig. 7 illustrates a configuration when an optical sensor is used as a channel sensor.
Fig. 8 is a schematic diagram of an analog waveform obtained when an optical sensor is attached to two types of channels having different colors (transparencies).
Fig. 9 illustrates a channel configuration of a cleaning mechanism according to Example 1.
Fig. 10 illustrates a channel configuration of an electrolyte analysis mechanism according to Example 2.

### Description of Embodiments

One embodiment of the invention will now be described with reference to the drawings.

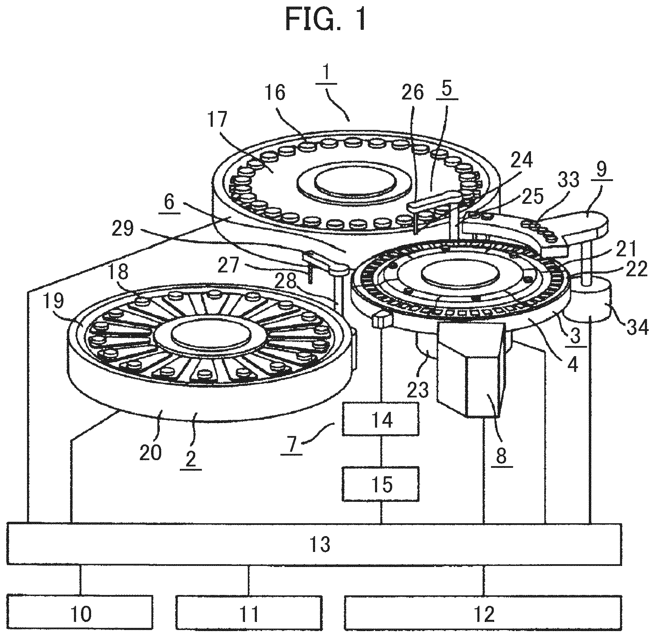

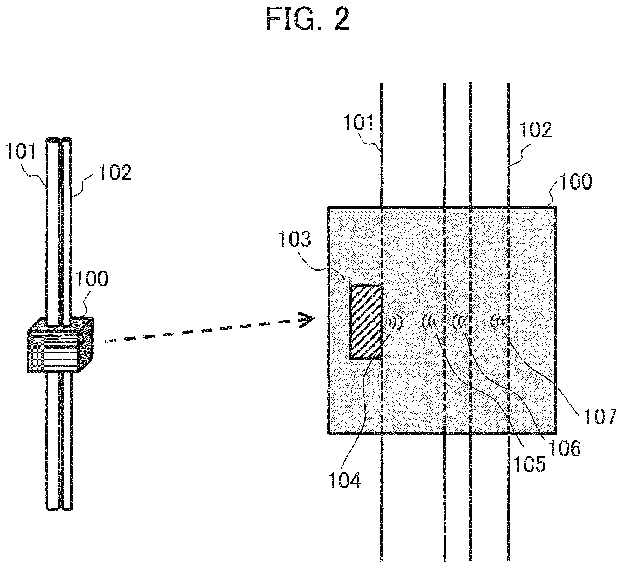

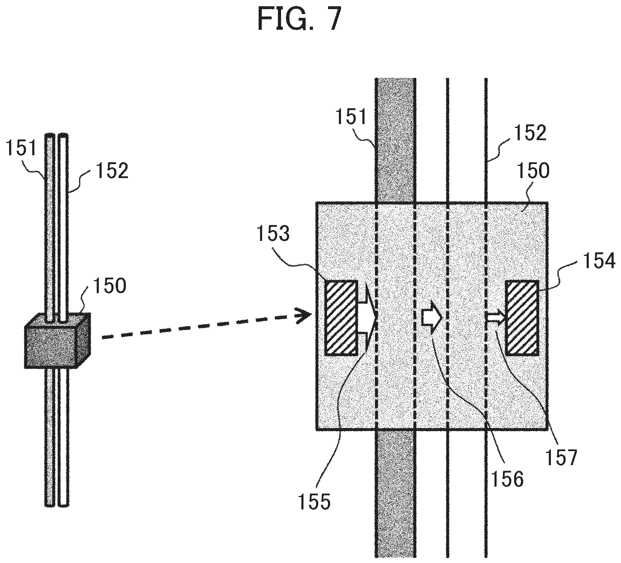

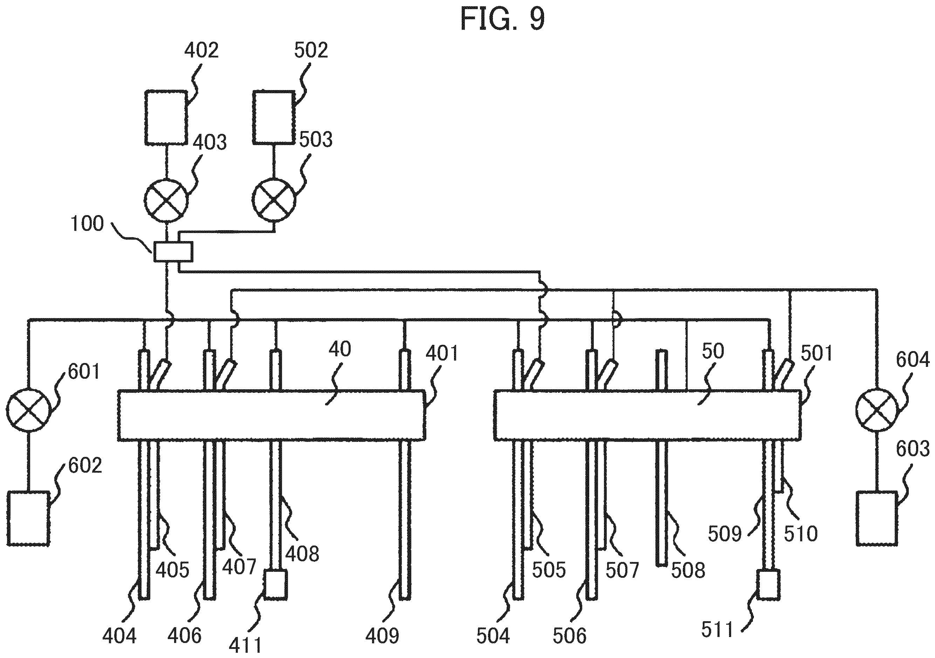

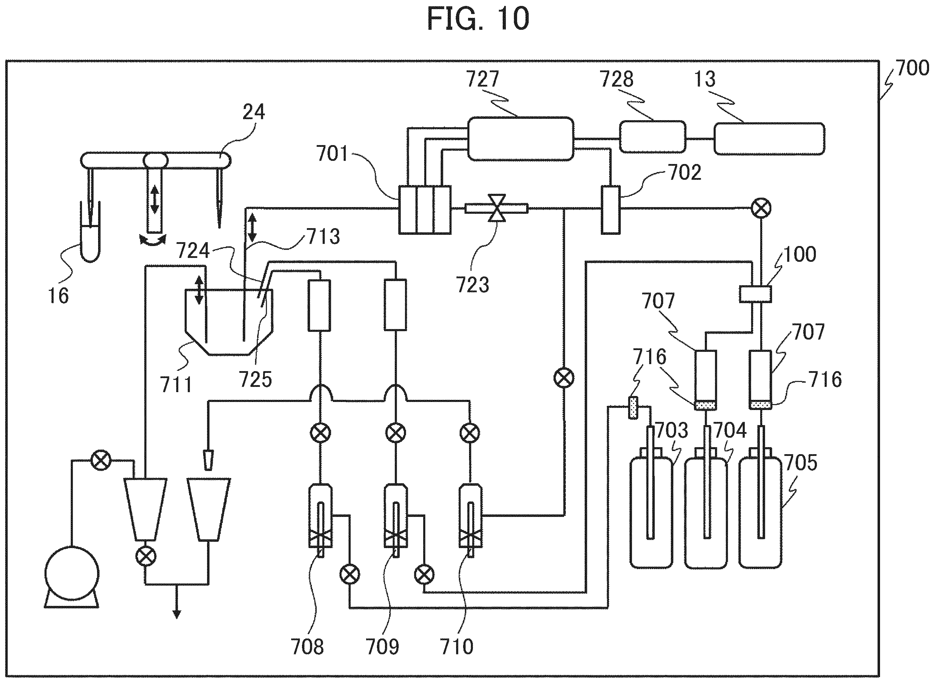

Fig. 1 illustrates a basic configuration of an automatic analyzer according to this embodiment. As illustrated in Fig. 1, the automatic analyzer of this embodiment mainly includes a sample disc 1, a reagent disc 2, a reaction disc 3, a reaction tank 4, a sample dispensing mechanism 5, a reagent dispensing mechanism 6, a stirring mechanism 7, a photometric mechanism 8, a cleaning mechanism 9, a display unit 10, an input unit 11, a storage unit 12, and a control unit 13. Although not shown in Fig. 1, a channel sensor 100 or 150 as shown in Fig. 2 or 7 is provided for a plurality of channels to be monitored. A specific configuration of the channel to which the channel sensor 100 or 150 is applied will be described later in Example 1 and Example 2 with reference to Figs. 9 and 10. In Example 2, the automatic analyzer of Fig. 1 further includes an electrolyte analysis mechanism 700.

Returning to Fig. 1, the sample disc 1 has a plurality of sample containers 16 containing collected samples arranged fixedly on the circumference of a circular disc 17. The circular disc 17 rotates circumferentially (clockwise or anti-clockwise) in a locatable manner by a drive mechanism configured of undepicted components such as a motor and a rotary shaft. On the reagent disc 2, a plurality of reagent bottles 18, each containing a reagent to be mixed and reacted with the sample, are fixed and arranged on the circumference of a circular disc 19, and are accommodated in a temperature-controlled cool box 20. The circular disc 19 is rotated in the circumferential direction (clockwise and counterclockwise) in a locatable manner by a driving mechanism configured of undepicted components such as a motor and a rotary shaft.

A plurality of reaction container holders 22 holding reaction containers 21 to contain samples and reagents are attached to the reaction disc 3, and each reaction container holder repeatedly rotates and stops in a constant cycle in a circumferential (clockwise and counterclockwise) direction by a drive mechanism 23 to intermittently transfer the reaction container 21. The reaction tank 4 is provided along the movement trajectory of the reaction containers 21 so as to accommodate the reaction containers 21, and has a constant temperature bath that controls a mixed liquid (reaction liquid) in the reaction container 21 at a constant temperature by, for example, temperature-controlled constant temperature water in order to promote a chemical reaction of the sample and the reagent.

The sample dispensing mechanism 5 includes a probe 24, an arm 26 attached to a bearing shaft 25, and a drive mechanism that allows reciprocation between the sample disc 1 and the reaction disc 3 with the bearing shaft 25 as a rotation center. The sample dispensing mechanism 5 supplies the reaction container 21 with the sample in the sample container 16, which is transferred to a fixed position with rotation of the sample disc 1, according to a predetermined sequence. Similarly, the reagent dispensing mechanism 6 includes a probe 27, an arm 29 attached to a bearing shaft 28, and a drive mechanism that allows reciprocation between the reagent disc 2 and the reaction disc 3 with the bearing shaft 28 as a rotation center. The reagent dispensing mechanism 6 supplies the reaction container 21 with the reagent in the reagent bottle 18, which is transferred to a fixed position with rotation of the reagent disc 2, according to a predetermined sequence. The respective sample containers 16 contain samples of the same type or different types, while the respective reagent bottles 18 contain reagents of the same type or different types, and a required amount of the sample or reagent is dispensed from the sample dispensing mechanism 5 or the reagent dispensing mechanism 6 and supplied to the reaction container 21.

The stirring mechanism 7 stirs and mixes the sample and the reagent in the reaction container 21 that has been transferred to the relevant position (stirring position). The stirring may be performed by a contact stirring method using a stirrer or a non-contact stirring method using an ultrasonic wave or the like.

The photometric mechanism 8 includes, although not shown, a light source, a photometer, a lens, and a photometric signal processing unit, and measures physical properties of the sample, such as absorbance of the reaction liquid in the reaction container 21, with light.

The cleaning mechanism 9, which includes a plurality of nozzles 33 and a vertical drive mechanism 34 for the nozzles 33, aspirates the reaction liquid in the reaction container 21, discharges a cleaning liquid to clean the reaction container 21 that has been transferred to the relevant position (cleaning position).

The display unit 10 performs various screen displays, including analysis items and analysis results, and the input unit 11 is to input various types of information, including analysis items. The storage unit 12 stores various information such as a predetermined sequence (program) to control each mechanism and analysis items.

The channel sensor 100 or 150, omitted in Fig. 1, is mainly applied to channels involved in various mechanisms, such as the sample dispensing mechanism 5, the reagent dispensing mechanism 6, the cleaning mechanism 9 described later with Fig. 9, and the electrolyte analysis mechanism 700 described later with Fig. 10, and monitors a state in each channel.

A configuration of the channel sensor 100 or 150 to monitor an internal state of the channel is now described. For the channel sensor 100 or 150 of this embodiment, since one sensor monitors a plurality of channels having different properties, complication of the analyzer is suppressed, which contributes to a reduction in cost and failure probability due to increased number of sensors. In addition, an analogue sensor is used in this embodiment so that measured data is transmitted in the form of analog data as it is to the control unit 13 without being subjected to A/D conversion. The control unit 13 analyzes a continuous analog waveform received from the analog sensor to determine whether or not liquid shortage, a bubble, an impurity, or the like is present in the channel.

Fig. 2 illustrates a configuration when an ultrasonic sensor is used as the channel sensor 100. As illustrated in Fig. 2, the channel sensor 100 is attached to a plurality of channels to be monitored. A case where a first channel 101 with a large diameter and a second channel 102 with a small diameter are monitored as two types of channels having different diameters (inner diameters) is now exemplarily described. The channels can be made of the same material because they have different diameters. The number of channels monitored by the channel sensor 100 may be three or more without being limited to two.

The ultrasonic channel sensor 100 has a built-in piezoelectric element 103. The piezoelectric element 103 is desirably fixed to one of the channels so as not to change a positional relationship between the piezoelectric element 103 and each channel. The piezoelectric element 103 can transmit a pulsed excitation wave 104 for monitoring a state of the channel. The excitation wave 104 transmitted from the piezoelectric element 103 propagates to the right side of Fig. 2, and when it reaches the right-hand wall of the first channel 101, a reflected wave 105 is generated due to a difference in acoustic impedance between the inside (including, for example, liquid or air flowing through the channel) and the wall (material forming the first channel 101). Although a reflected wave is also generated by the left-hand wall of the first channel 101 immediately after the excitation wave 104 is transmitted from the piezoelectric element 103, this is not described below. While the reflected wave 105 is generated, the excitation wave 104 passing through the right side wall of the first channel 101 reaches the left side wall of the second channel 102, and a reflected wave 106 is similarly generated due to a difference in acoustic impedance. Further, the excitation wave 104 passing through the left side wall of the second channel 102 reaches the right side wall of the second channel 102, and a reflected wave 107 is generated. Reflected waves 105 to 107 generated in this way are detected by the piezoelectric element 103.

If an abnormality (liquid shortage, bubble, contamination of impurity or the like) occurs in each channel, a reflected wave 108 other than the reflected waves 105 to 107 is generated. Detecting the reflected wave 108 by the piezoelectric element 103 makes it possible to detect an abnormality in each channel. The interior of the channel sensor 100 may be filled with a substance that is close in acoustic impedance to the first channel 101 or the second channel 102 (at least closer in acoustic impedance to each channel than air). This reduces a change in acoustic impedance and suppresses extra reflected waves that would otherwise be noise, thus enabling accurate detection of a reflected wave related to an abnormality.

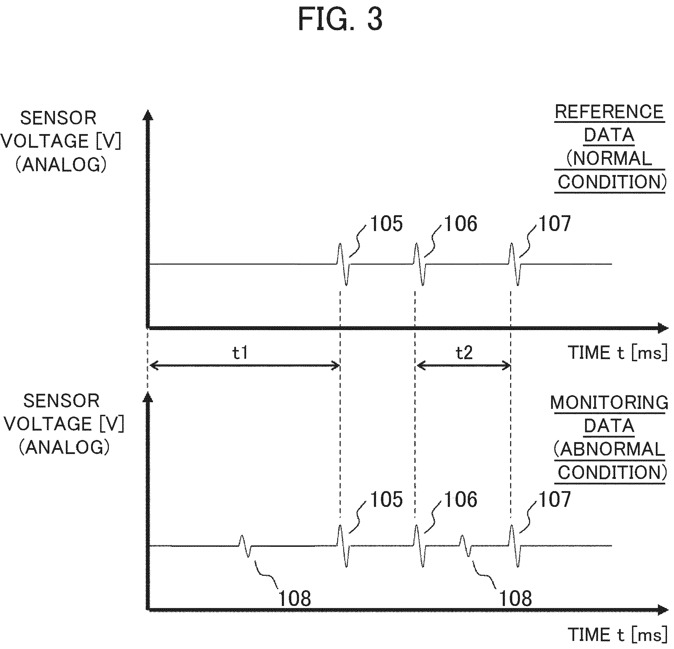

Fig. 3 is a schematic diagram of analog waveforms obtained when the channel sensor 100 as shown in Fig. 2 is attached to the first channel 101 and the second channel 102 being two types of channels having different diameters. The upper part of Fig. 3 shows reference data (waveform under a normal condition) measured beforehand before monitoring for comparison, and the lower part of Fig. 3 shows monitoring data (waveform under an abnormal condition) measured when an abnormality has occurred during monitoring. In both cases, the vertical axis is signal intensity (sensor voltage) of the reflected wave, and the horizontal axis is time.

In the reference data, only the reflected waves 105 to 107, which are reflected by the walls of the first channel 101 and the second channel 102, are detected as described above. Since the reflected waves 105 to 107 in the reference data have different time intervals, the range of each channel is specified using such a difference in time interval. Specifically, since time t1 (from the origin to detection of the reflected wave 105) during which the excitation wave 104 propagates through the first channel 101 is different from time t2 (from detection of the reflected wave 106 to detection of the reflected wave 107) during which the excitation wave 104 propagates through the second channel 102, the corresponding channel can be specified for each time zone.

On the other hand, in the monitoring data under the abnormal condition, the reflected wave 108, indicating that an abnormality has occurred in a channel, is detected in addition to the reflected waves 105 to 107. The control unit 13 therefore can determine in which channel an abnormality has occurred depending on to which time zone the reflected wave 108 belongs. Although Fig. 3 shows that an abnormality occurs in each of the channels, the first channel 101 and the second channel 102, the objective channel can be specified even if an abnormality occurs in only one of the channels. In addition, a type of abnormality may be specified by signal intensity of the reflected wave 108. For example, when the signal intensity of the reflected wave 108 is higher than a predetermined threshold, the abnormality can be determined to be liquid shortage.

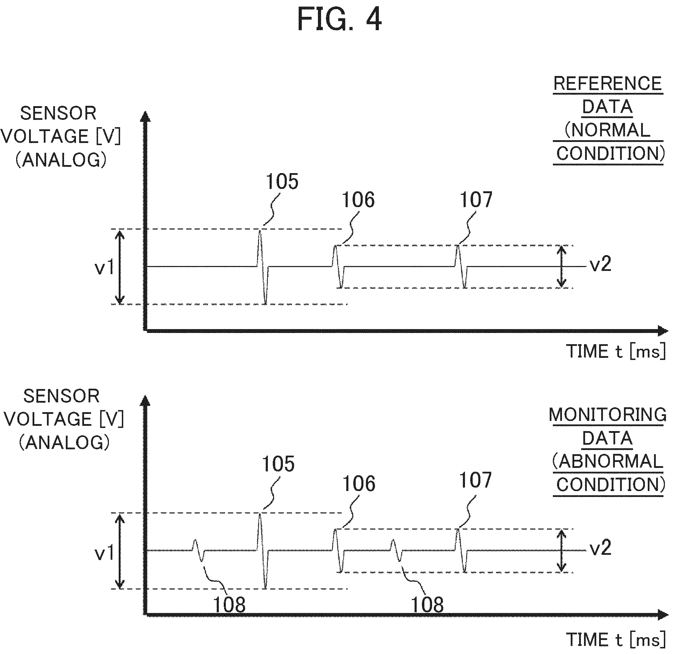

Fig. 4 is a schematic diagram of analog waveforms obtained when the channel sensor 100 is attached to two types of channels including different materials, i.e., a third channel 109 (material A) and a fourth channel 110 (material B). The upper part of Fig. 4 shows reference data (a waveform under a normal condition) measured beforehand before monitoring for comparison, and the lower part of Fig. 4 shows monitoring data (a waveform under an abnormal condition) measured when an abnormality has occurred during monitoring. In both cases, the vertical axis is signal intensity (sensor voltage) of the reflected wave, and the horizontal axis is time.

In the reference data, only reflected waves 105 to 107, which have been respectively reflected by the walls of the third channel 109 and the fourth channel 110, are detected as described above. Since the reflected waves 105 to 107 found in the reference data have different signal intensities in addition to different time intervals, the range of each channel can also be specified using such a difference in signal intensity. Specifically, since the sensor voltage v1 of the reflected wave of the excitation wave 104 reflected by the third channel 109 is different from the sensor voltage v2 of the reflected wave of the excitation wave 104 reflected by the fourth channel 110, each channel range can be specified.

On the other hand, in the monitoring data under the abnormal condition, a reflected wave 108, indicating that an abnormality has occurred in the channel, is detected in addition to the reflected waves 105 to 107. The control unit 13 therefore can determine in which channel an abnormality has occurred depending on to which range the reflected wave 108 belongs. Although Fig. 4 shows that an abnormality occurs in each of the channels, i.e., the third channel 109 and the fourth channel 110, it is possible to specify an objective channel even if an abnormality occurs in only one of the two channels.

As described above, when the respective channels have different materials, in which channel an abnormality has occurred can be determined even by one channel sensor 100. In this case, since the channels can be designed to have the same diameter, flow rate of the liquid flowing through each channel can be easily controlled. Furthermore, if the channels have different acoustic impedances, for example, due to respectively different processing methods, the channels may include the same material.

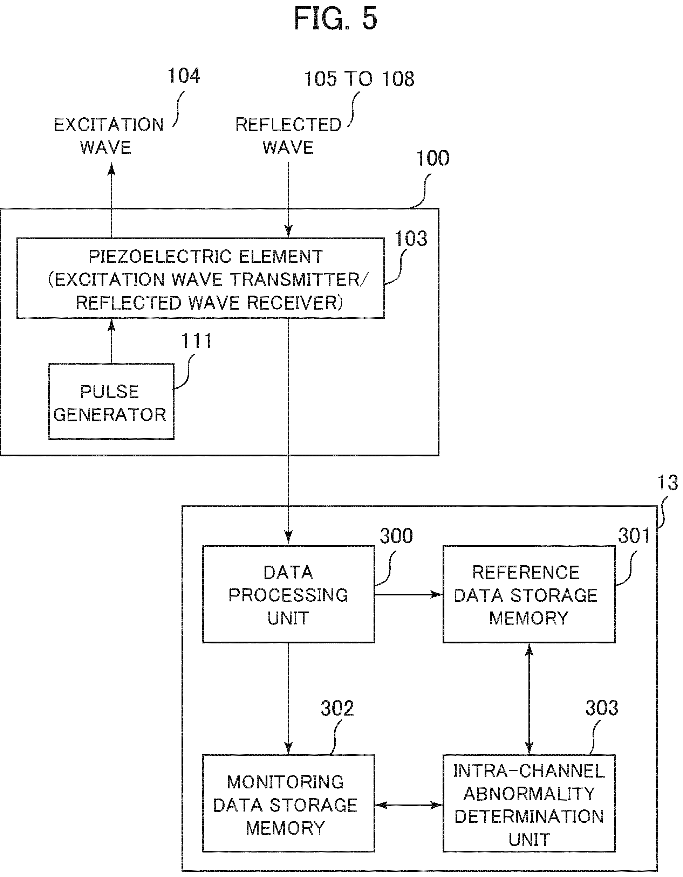

Fig. 5 shows block diagrams of the channel sensor 100 and the control unit 13 according to this embodiment. As illustrated in Fig. 5, the channel sensor 100 includes the piezoelectric element 103 that serves both as an excitation wave transmitter and as a reflected wave receiver, and a pulse generator 111. A pulse signal generated by the pulse generator 111 is applied to the piezoelectric element 103, so that the piezoelectric element 103 transmits an excitation wave 104. The piezoelectric element 103 also receives the reflected waves 105 to 108 of the transmitted excitation wave 104.

The control unit 13 also includes a data processing unit 300, a reference data storage memory 301, a monitoring data storage memory 302, and an intra-channel abnormality determination unit 303. The data processing unit 300 receives data of the reflected waves 105 to 108 detected by the piezoelectric element 103. If the received data is the reference data indicating the waveform under the normal condition for comparison, the data is stored in the reference data storage memory 301. If the received data is the monitoring data for determining presence or absence of an abnormality in the channel, the monitoring data is stored in the monitoring data storage memory 302.

Subsequently, the intra-channel abnormality determination unit 303 determines an abnormality in the liquid flowing through the channel based on measurement results of the channel sensor 100. Specifically, the intra-channel abnormality determination unit 303 acquires the respective data stored in the reference data storage memory 301 and the monitoring data storage memory 302, compares the reference data and the monitoring data by edge detection using differential arithmetic, and determines whether any peculiar data exists in the monitoring data. If there is an abnormality in the monitoring data, as described above, the control unit 13 raises an abnormality flag for the abnormal channel, transmits a stop instruction to each mechanism of the automatic analyzer, and informs a user of in which channel the abnormality occurs. This makes it possible to prevent a situation that may adversely affect analysis accuracy.

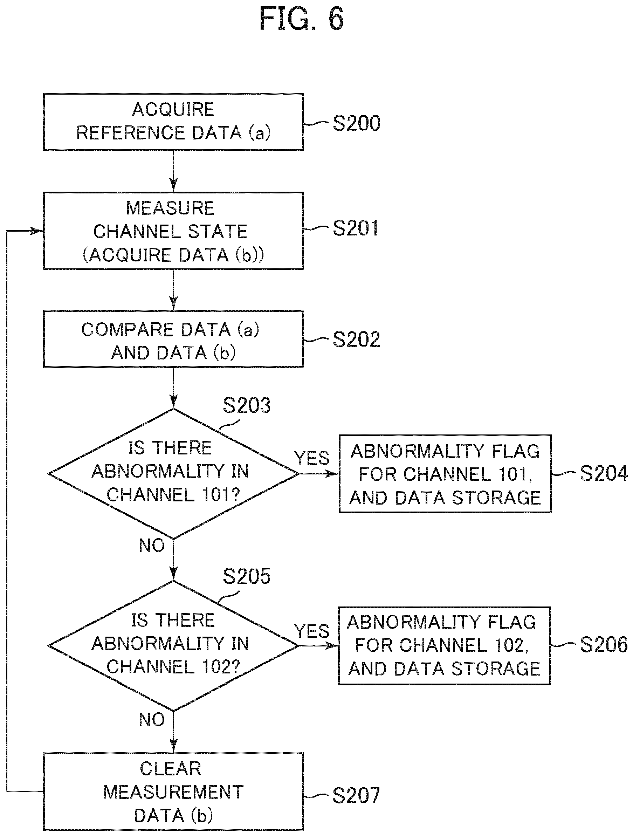

**Fig.** 6 is a flowchart illustrating a method for determining an abnormality in a channel to be monitored according to this embodiment. Description is now given with an exemplary case where one common channel sensor 100 monitors the first channel 101 and the second channel 102 having different diameters as a plurality of channels having different properties.

The control unit 13 of the automatic analyzer of this embodiment acquires reference data (a) in a state where there is no abnormality in an objective channel before monitoring the channel (step S200). After acquiring the reference data (a), the control unit 13 monitors the objective channel and acquires monitoring data (b) as the channel state being monitored (step S201). At this time, the channel sensor 100 transmits a pulsed excitation wave 104 from the piezoelectric element 103 and receives the reflected waves 105 to 108 of the excitation wave 104. When the monitoring data (b) has been acquired, the intra-channel abnormality determination unit 303 of the control unit 13 compares the beforehand acquired reference data (a) with the most recently acquired monitoring data (b) (step S202). In the data comparison, presence or absence of the reflected wave 108 is determined using edge detection by differential arithmetic.

First, the intra-channel abnormality determining unit 303 of the control unit 13 determines presence or absence of an abnormality in the first channel 101 (step S203). If an abnormality is determined to be present in step S203, an abnormality flag is raised for the first channel 101, and the monitoring data (b) under an abnormal condition is stored (step S204). Subsequently, the intra-channel abnormality determining unit 303 of the control unit 13 determines presence or absence of an abnormality in the second channel 102 (step S205). If an abnormality is determined to be present in step S205, an abnormality flag is raised for the second channel 102, and the monitoring data (b) under an abnormal condition is stored (step S206).

If no abnormality is present in the channel, such a determination result is sent to a higher level of the control unit 13, and the monitoring data (b) is cleared (S207), and then the process returns to step S201 to measure a state of the channel in the subsequent monitoring cycle. During operation of the automatic analyzer, the steps S201 to S207 described above are repeated. Although an example, in which the first channel 101 and the second channel 102 having different diameters are given as monitoring objects, is given in Fig. 6, it goes without saying that a plurality of channels having different properties, including materials, may be monitoring objects.

Fig. 7 illustrates a configuration when an optical sensor is used as the channel sensor 150. As illustrated in Fig. 7, the channel sensor 150 is attached to a plurality of channels to be monitored. Description is now given with an exemplary case where a fifth channel 151 having a wall formed with a color C having low transparency and a sixth channel 152 having a wall formed with a color D having high transparency are monitored as two kind of channels having different colors (transparencies). The number of channels monitored by the channel sensor 150 may be three or more without being limited to two.

The optical channel sensor 150 includes built-in elements, i.e., a light emitting element 153 and a light receiving element 154, and is structured such that light emitted from the light emitting element 153 can be received by the light receiving element 154. The excitation light 155 transmitted from the light emitting element 153 propagates to the right side of Fig. 7 and becomes transmitted light 156 after passing through the wall of the fifth channel 151. The transmitted light 156 then becomes transmitted light 157 after passing through the sixth channel 152, and the transmitted light 157 finally reaches the light receiving element 154. The transmitted light 156 and the transmitted light 157 are each attenuated in light intensity by scattering and reflection while passing through each channel, and thus when reaching the light receiving element 154, the transmitted light 157 is attenuated in light intensity by a certain amount from the excitation light 155.

If an abnormality (liquid shortage, bubble, or contamination of foreign substance) occurs in each channel, the transmitted light 156 and the transmitted light 157 are each further attenuated in light intensity. Moreover, the amount of attenuation differs depending on a color (transparency) of each channel. For example, as illustrated in Fig. 7, when the color of the fifth channel 151 has a lower degree of transparency than the color of the sixth channel 152, attenuation of light intensity due to abnormality occurring in the sixth channel 152 is greater than attenuation of light intensity due to abnormality occurring in the fifth channel 151. It is therefore possible to determine in which channel an abnormality has occurred by detecting a difference in light intensity attenuation as the degree of attenuation of intensity of transmitted light.

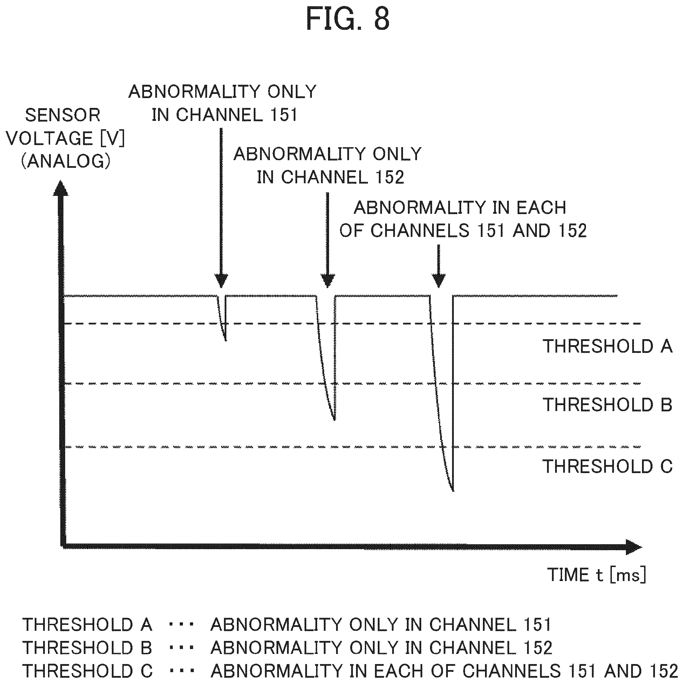

Fig. 8 is a schematic diagram of an analog waveform obtained when the channel sensor 150 illustrated in Fig. 7 is attached to two types of channels having different colors (transparencies), i.e., the fifth channel 151 and the sixth channel 152. The vertical axis is signal intensity (sensor voltage) of transmitted light, and the horizontal axis is time.

As described above, the degree of attenuation of the transmitted light intensity differs between the case where an abnormality occurs in the fifth channel 151 and the case where an abnormality occurs in the sixth channel 152. It is therefore possible to determine in which channel an abnormality has occurred by separately setting a threshold value A for detecting an abnormality in the fifth channel 151 and a threshold value B for detecting an abnormality in the sixth channel 152. Furthermore, when the signal intensity of the transmitted light falls below a threshold value C, which is lower than both the threshold values A and B, it is possible to detect that an abnormality has occurred in both the channels 151 and 152.

Although the ultrasonic sensor and the optical sensor are exemplarily given as analogue sensors in the above embodiment, another type of sensor may be used as long as it sends continuously measured analogue data as it is to the intra-channel abnormality determination unit 303 of the control unit 13.

### Example 1

In Example 1, the channel sensor 100 according to this embodiment is applied to channels in the cleaning mechanism 9. Fig. 9 illustrates a channel configuration of the cleaning mechanism 9 according to the Example 1. The cleaning mechanism 9 of this Example mainly includes a first cleaning mechanism 40 and a second cleaning mechanism 50. Each cleaning mechanism includes nozzle holding units 401 and 501 that each hold a plurality of cleaning nozzles for aspirating a cleaning liquid from the respective reaction containers 21 and discharging the cleaning liquid, an alkaline cleaning liquid tank 402 that stores an alkaline cleaning liquid for cleaning, a water feeding pump 403 that feeds the alkaline cleaning liquid from the alkaline cleaning liquid tank 402 to each nozzle, an acidic cleaning liquid tank 502 that stores an acidic cleaning liquid for cleaning, a water feeding pump 503 that feeds the acidic cleaning liquid from the acidic cleaning liquid tank 502 to each nozzle, a single channel sensor 100 that monitors two channels used in water feeding from each tank, an aspiration pump 601 to aspirate a reaction liquid, the cleaning liquid, and washing water from each reaction container 21 with a relevant nozzle, a disposal tank 602 to dispose of the reaction liquid and the cleaning liquid aspirated by the aspiration pump 601, a washing water tank 603 that stores the washing water for washing away the cleaning liquid, and a water pump 604 that supplies the washing water from the washing water tank to each nozzle.

The cleaning nozzles of the first cleaning mechanism 40 include a reaction liquid aspirating nozzle 404 that aspirates the reaction liquid, an alkaline cleaning liquid discharge nozzle 405 that discharges the alkaline cleaning liquid, an acid cleaning liquid aspirating nozzle 406 that aspirates the acid cleaning liquid, a washing water discharge nozzle 407 that discharges the washing water to wash out the cleaning liquid, a washing water/bubble aspirating nozzle 408 that aspirates the washing water and bubbles with a nozzle tip 411, and a cell blank liquid aspirating nozzle 409 that aspirates a cell blank liquid. On the other hand, the cleaning nozzles of the second cleaning mechanism 50 include a cleaning liquid aspirating nozzle 504 that aspirates the alkaline cleaning liquid, a cleaning liquid discharge nozzle 505 that discharges the acid cleaning liquid, a washing water aspirating nozzle 506 that aspirates the washing water, a washing water discharge nozzle 507 that discharges the washing water to wash out the cleaning liquid, a cell blank liquid discharge nozzle 508 that discharges the cell blank liquid, a finish aspirating nozzle 509 having a nozzle tip 511 for aspirating the cleaning liquid at the end of the cleaning process, and a tip washing water discharge nozzle 510 to wash the nozzle tip 511.

As described above, in this Example, it is configured that the single channel sensor 100 is provided for the two channels, which are used in liquid feeding from the alkaline cleaning liquid tank 402 and from the acidic cleaning liquid tank 502, to monitor the channels. According to this Example, it is possible to detect shortage of the alkaline cleaning liquid and/or the acid cleaning liquid, contamination of a foreign substance in each liquid, and the like. Shortage of each cleaning liquid or contamination of the foreign substance in the cleaning liquid leads to insufficient cleaning of each reaction container 21, causing reduction in analysis accuracy. Hence, the channel state can be monitored by the channel sensor 100 to prevent reduction in analysis accuracy. The channel sensor 100 may be used for monitoring the channel used in liquid feeding from the disposal tank 602 or from the washing water tank 603 without being limited to the configuration of this Example.

### Example 2

In Example 2, the channel sensor 100 according to this embodiment is applied to channels in the electrolyte analysis mechanism. Fig. 10 illustrates a channel configuration of the electrolyte analysis mechanism according to the Example 2. Fig. 10 exemplarily shows a flow-type electrolyte analysis mechanism 700 using an ion selective electrode (hereinafter referred to as ISE electrode). The electrolyte analysis mechanism 700 in this Example mainly includes five mechanisms (sample dispensing unit, ISE electrode unit, reagent unit, mechanical unit, and effluent mechanism) and includes the control unit 13 that controls these mechanisms, calculates electrolyte concentration from measurement results, and displays the calculated electrolyte concentration.

The sample dispensing unit dispenses a sample such as a specimen held in the sample container 16 by the probe 24 and draws the specimen into the analyzer. The specimen herein is a generic term for an analysis object taken from a living body of a patient, e.g., blood or urine. An analysis object obtained by performing a predetermined pretreatment on such a specimen is also referred to as specimen. The ISE electrode unit includes a dilution tank 711, a sipper nozzle 713, a diluent nozzle 724, an internal standard liquid nozzle 725, an ISE electrode 701, a reference electrode 702, a pinch valve 723, a voltmeter 727, and an amplifier 728. The sample dispensed by the sample dispensing unit is discharged into the dilution tank 711, and diluted and stirred with a diluent discharged into the dilution tank 711 from the diluent nozzle 724. The sipper nozzle 713 is connected to the ISE electrode 701 through a channel, and the diluted sample solution aspirated from the dilution tank 711 is fed to the ISE electrode 701 through the channel. On the other hand, a reference electrode liquid contained in a reference electrode liquid bottle 705 is fed to the reference electrode 702 by operating a sipper syringe 710 while the pinch valve 723 is closed. When the diluted sample solution fed to an ISE electrode channel comes into contact with the reference electrode liquid fed to a reference electrode channel, the ISE electrode 701 is electrically conducted to the reference electrode 702.

The ISE electrode unit measures concentration of a specific electrolyte contained in the sample based on a potential difference between the ISE electrode 701 and the reference electrode 702. Specifically, an ion-sensitive film, which has a property of changing electromotive force depending on concentration of a specific ion (e.g., sodium ion (Na⁺), potassium ion (K⁺), chlorine ion (Cl⁻), etc.) in the sample solution, is attached to the ISE electrode 701. The ISE electrode 701 outputs the electromotive force corresponding to each ion concentration in the sample solution, and acquires electromotive force between the ISE electrode 701 and the reference electrode 702 using the voltmeter 727 and the amplifier 728. The control unit 13 calculates ion concentration in the specimen from the acquired electromotive force for each ion, and displays the calculated ion concentration. The sample solution remaining in the dilution tank 711 is discharged by the effluent mechanism.

In the configuration of this Example, one channel sensor 100 is provided for two channels, which are used in liquid feeding from a diluent bottle 704 and the reference electrode liquid bottle 705, to monitor the channels. According to this Example, it is possible to detect shortage of the diluent and reference electrode liquid, contamination of foreign substances in such liquids, and the like. Since the shortage of the diluent and the reference electrode liquid or the contamination of foreign substances in the liquids may cause reduction in accuracy of electrolyte concentration measurement, reduction in analysis accuracy can be prevented by monitoring a channel state with the channel sensor 100. Furthermore, a degassing mechanism 707 and a filter 716 are designed to be connected to the channels in advance to remove bubbles and impurities in the channels, and higher analysis accuracy can be ensured by adding the channel sensor 100 in this Example. It is to be noted that the configuration of this Example is not restrictive, and the channel sensor 100 may be used to monitor the channels used in liquid feeding from an internal standard solution bottle 703, an internal standard solution syringe 708, a diluent syringe 709, and the sipper syringe 710.

It should be noted that the present invention is not limited to the examples described above, and includes various modification examples. Further, the above-described embodiments have been described in detail in order to facilitate the understanding of the present invention, and the present invention is not necessarily limited to those including all of the described configurations.

### List of Reference Signs

1 Sample disc, 2 reagent disc, 3 reaction disc, 4 reaction tank, 5 sample dispensing mechanism, 6 reagent dispensing mechanism, 7 stirring mechanism, 8 photometric mechanism, 9 cleaning mechanism, 10 display unit, 11 input unit, 12 storage unit, 13 control unit, 14 stirring mechanism driver, 15 stirring mechanism controller, 16 sample container, 17, 19 circular disc, 18 reagent bottle, 20 cool box, 21 reaction container, 22 reaction container holder, 23 drive mechanism, 24, 27 probe, 25, 28 bearing shaft, 26, 29 arm, 33 nozzle, 34 vertical drive mechanism, 40 first cleaning mechanism, 50 second cleaning mechanism, 100 channel sensor (ultrasonic type), 101 first channel (large channel diameter) 102 second channel (small channel diameter), 103 piezoelectric element, 104 excitation wave, 105 to 108 reflected wave, 109 third channel (material A), 110 forth channel (material B), 111 pulse generator, 150 channel sensor (optical type), 151 fifth channel (color C), 152 sixth channel (color D), 153 light emitting element, 154 light receiving element, 155 excitation light, 156, 157 transmitted light, 300 data processing unit, 301 reference data storage memory, 302 monitoring data storage memory, 303 intra-channel abnormality determination unit, 401, 501 nozzle holding unit, 402 alkaline cleaning liquid tank, 403, 503, 604 water feeding pump, 404 reaction liquid aspirating nozzle, 405 cleaning liquid discharge nozzle, 406 cleaning liquid aspirating nozzle, 407 washing water discharge nozzle, 408 washing water/bubble aspirating nozzle, 409 cell blank liquid aspirating nozzle, 411 nozzle tip, 502 acidic cleaning liquid tank, 504 cleaning liquid aspirating nozzle, 505 cleaning liquid discharge nozzle, 506 washing water aspirating nozzle, 507 washing water discharge nozzle, 508 cell blank liquid discharge nozzle, 509 finish aspirating nozzle, 510 tip washing water discharge nozzle, 511 nozzle tip, 601 aspiration pump, 602 disposal tank, 603 washing water tank, 700 electrolyte analysis mechanism, 701 ISE electrode, 702 reference electrode, 703 internal standard solution bottle, 704 diluent bottle, 705 reference electrode liquid bottle, 707 degassing mechanism, 708 internal standard solution syringe, 709 diluent syringe, 710 sipper syringe, 711 dilution tank, 713 sipper nozzle, 716 filter, 723 pinch valve, 724 diluent nozzle, 725 internal standard liquid nozzle, 727 voltmeter, 728 amplifier

## Claims

1. An automatic analyzer, comprising:
a channel (101, 102) through which liquid flows;
a sensor (100, 150) that monitors the channel (101, 102); and
a control unit (13) that determines abnormality in the liquid flowing through the channel based on measurement results of the sensor,
**characterized in that**
the sensor (100, 150) monitors, as monitoring objects, the plurality of channels (101, 102) having different properties, and
the control unit (13) determines in which of the channels (101, 102) an abnormality has occurred based on analogue monitoring data continuously measured by the sensor (100, 159) during monitoring and analogue reference data continuously measured by the sensor (101, 102) before monitoring.

2. The automatic analyzer according to claim 1, wherein one of the sensors (100, 150) monitors, as monitoring objects, the plurality of channels (101, 102) having different diameters.

3. The automatic analyzer according to claim 2, wherein
the sensor (100) is an ultrasonic sensor, and
the control unit (13) specifies a range of each of the channels (101, 102) using a difference in time interval between reflected waves existing in the reference data, and determines that which of the channels (101, 102) an abnormality has occurred depending on to which range a reflected wave existing only in the monitoring data belongs.

4. The automatic analyzer according to claim 1, wherein one of the sensors (100, 150) monitors, as monitoring objects, the plurality of channels (109, 110) including different materials.

5. The automatic analyzer according to claim 4, wherein
the sensor (100) is an ultrasonic sensor, and
the control unit (13) specifies a range of each of the channels (101, 102) using a difference in signal intensity between reflected waves existing in the reference data, and determines in which of the channels (101, 102) an abnormality has occurred depending on to which range a reflected wave existing only in the monitoring data belongs.

6. The automatic analyzer according to claim 1, wherein
one of the sensors (150) is an optical sensor, and monitors, as monitoring objects, the plurality of channels (151, 152) having different transparencies, and
the control unit (13) determines that which of the channels (151, 152) an abnormality has occurred depending on the degree of attenuation of intensity of transmitted light.

7. The automatic analyzer according to claim 1, further comprising:
a reaction disc (3) holding a plurality of reaction containers (21) each containing a mixed liquid of a sample and a reagent; and
a cleaning mechanism (9) including a plurality of nozzles (33) to discharge a cleaning liquid to the reaction containers (21),
wherein one of the sensors (100, 150) monitors, as monitoring objects, a plurality of channels connected to the respective nozzles (33).

8. The automatic analyzer according to claim 1, further comprising:
a flow-type electrolyte analysis mechanism (700) using an ion selective electrode (701),
wherein
the electrolyte analysis mechanism (700) includes a diluent bottle (704) containing a diluent solution, and a reference electrode liquid bottle (705) containing a reference electrode liquid, and
one of the sensors (100, 150) monitors, as monitoring objects, a channel connected to the diluent bottle (704) and a channel connected to the reference electrode liquid bottle (705).

## Patentansprüche

1. Automatische Analysevorrichtung, umfassend:
einen Kanal (101, 102), durch den Flüssigkeit fließt;
einen Sensor (100, 150), der den Kanal (101, 102) überwacht; und
eine Steuereinheit (13), die eine Abnormalität in der durch den Kanal fließenden Flüssigkeit basierend auf den Messergebnissen des Sensors bestimmt,
**dadurch gekennzeichnet, dass**
der Sensor (100, 150) als Überwachungsobjekte die Mehrzahl von Kanälen (101, 102) mit unterschiedlichen Eigenschaften überwacht, und
die Steuereinheit (13) basierend auf kontinuierlich vom Sensor (100, 150) während der Überwachung gemessenen analogen Überwachungsdaten und kontinuierlich vom Sensor (100, 150) vor der Überwachung gemessenen analogen Referenzdaten bestimmt, in welchem der Kanäle (101, 102) eine Abnormalität aufgetreten ist.

2. Automatische Analysevorrichtung nach Anspruch 1, wobei einer der Sensoren (100, 150) als Überwachungsobjekte die Mehrzahl von Kanälen (101, 102) mit unterschiedlichen Durchmessern überwacht.

3. Automatische Analysevorrichtung nach Anspruch 2, wobei der Sensor (100) ein Ultraschallsensor ist und die Steuereinheit (13) einen Bereich jedes der Kanäle (101, 102) anhand eines Unterschieds im Zeitintervall zwischen reflektierten Wellen, die in den Referenzdaten vorhanden sind, spezifiziert und bestimmt, in welchem der Kanäle (101, 102) eine Abnormalität aufgetreten ist, abhängig davon, zu welchem Bereich eine reflektierte Welle gehört, die nur in den Überwachungsdaten vorhanden ist.

4. Automatische Analysevorrichtung nach Anspruch 1, wobei einer der Sensoren (100, 150) als Überwachungsobjekte die Mehrzahl von Kanälen (109, 110) mit unterschiedlichen Materialien überwacht.

5. Automatische Analysevorrichtung nach Anspruch 4, wobei der Sensor (100) ein Ultraschallsensor ist und die Steuereinheit (13) einen Bereich jedes der Kanäle (101, 102) anhand eines Unterschieds in der Signalintensität zwischen reflektierten Wellen, die in den Referenzdaten vorhanden sind, spezifiziert und abhängig davon, zu welchem Bereich eine reflektierte Welle gehört, die nur in den Überwachungsdaten vorhanden ist, bestimmt, in welchem der Kanäle (101, 102) eine Abnormalität aufgetreten ist.

6. Automatische Analysevorrichtung nach Anspruch 1, wobei einer der Sensoren (150) ein optischer Sensor ist und als Überwachungsobjekte die Mehrzahl von Kanälen (151, 152) mit unterschiedlichen Transparenzwerteb überwacht, und die Steuereinheit (13) abhängig vom Grad der Abschwächung der Intensität des durchgeleiteten Lichts bestimmt, in welchem der Kanäle (151, 152) eine Abnormalität aufgetreten ist.

7. Automatische Analysevorrichtung nach Anspruch 1, weiterhin umfassend:
eine Reaktionsscheibe (3), die eine Mehrzahl von Reaktionsbehältern (21) hält, wobei jeder Reaktionsbehälter eine Mischung aus Probe und Reagenz enthält; und
eine Reinigungsvorrichtung (9), die eine Mehrzahl von Düsen (33) umfasst, um Reinigungsflüssigkeit zu den Reaktionsbehältern (21) zu leiten,
wobei einer der Sensoren (100, 150) als Überwachungsobjekte eine Mehrzahl von Kanälen überwacht, die mit den jeweiligen Düsen (33) verbunden sind.

8. Automatische Analysevorrichtung nach Anspruch 1, weiterhin umfassend:
eine elektrolytische Analysevorrichtung (700) vom Durchfluss-Typ, die eine ionenselektive Elektrode (701) verwendet,
wobei
die elektrolytische Analysevorrichtung (700) eine Verdünnerflasche (704) enthält, die eine Verdünnungslösung enthält, und eine Referenzelektroden-Flüssigkeitsflasche (705), die eine Referenzelektroden-Flüssigkeit enthält, und
einer der Sensoren (100, 150) als Überwachungsobjekte einen Kanal, der mit der Verdünnerflasche (704) und einen Kanal, der mit der Referenzelektroden-Flüssigkeitsflasche (705) verbunden ist, überwacht.

## Revendications

1. Analyseur automatique, comprenant :
un canal (101, 102) à travers lequel un liquide s'écoule ;
un capteur (100, 150) qui surveille le canal (101, 102) ; et
une unité (13) de commande qui détermine une anomalie dans le liquide s'écoulant à travers le canal sur la base de résultats de mesure du capteur,
**caractérisé en ce que**
le capteur (100, 150) surveille, comme objets de surveillance, la pluralité de canaux (101, 102) ayant différentes propriétés, et
l'unité (13) de commande détermine dans lequel des canaux (101, 102) une anomalie est survenue sur la base de données de surveillance analogiques mesurées en continu par le capteur (100, 159) lors de la surveillance et de données de référence analogiques mesurées en continu par le capteur (101, 102) avant la surveillance.

2. Analyseur automatique selon la revendication 1, dans lequel un des capteurs (100, 150) surveille, comme objets de surveillance, la pluralité de canaux (101, 102) ayant différents diamètres.

3. Analyseur automatique selon la revendication 2, dans lequel
le capteur (100) est un capteur à ultrasons, et
l'unité (13) de commande spécifie une plage de chacun des canaux (101, 102) en utilisant une différence d'intervalle de temps entre ondes réfléchies existant dans les données de référence, et détermine celui des canaux (101, 102) dans lequel une anomalie est survenue en fonction d'à quelle plage une onde réfléchie n'existant que dans les données de surveillance appartient.

4. Analyseur automatique selon la revendication 1, dans lequel un des capteurs (100, 150) surveille, comme objets de surveillance, la pluralité de canaux (109, 110) incluant différents matériaux.

5. Analyseur automatique selon la revendication 4, dans lequel
le capteur (100) est un capteur à ultrasons, et
l'unité (13) de commande spécifie une plage de chacun des canaux (101, 102) en utilisant une différence d'intensité de signal entre ondes réfléchies existant dans les données de référence, et détermine dans lequel des canaux (101, 102) une anomalie est survenue en fonction d'à quelle plage une onde réfléchie n'existant que dans les données de surveillance appartient.

6. Analyseur automatique selon la revendication 1, dans lequel
un des capteurs (150) est un capteur optique, et surveille, comme objets de surveillance, la pluralité de canaux (151, 152) ayant différentes transparences, et
l'unité (13) de commande détermine celui des canaux (151, 152) dans lequel une anomalie est survenue en fonction du degré d'atténuation d'intensité de lumière transmise.

7. Analyseur automatique selon la revendication 1, comprenant en outre :
un disque (3) de réaction contenant une pluralité de récipients (21) de réaction contenant chacun un liquide mixte d'un échantillon et d'un réactif ; et
un mécanisme (9) de nettoyage incluant une pluralité de buses (33) pour décharger un liquide de nettoyage dans les récipients (21) de réaction,
dans lequel un des capteurs (100, 150) surveille, comme objets de surveillance, une pluralité de canaux connectés aux buses (33) respectives.

8. Analyseur automatique selon la revendication 1, comprenant en outre :
un mécanisme (700) d'analyse d'électrolytes de type en flux utilisant une électrode (701) sélective d'ions,
dans lequel
le mécanisme (700) d'analyse d'électrolytes inclut une bouteille (704) de diluant contenant une solution de diluant, et une bouteille (705) de liquide d'électrode de référence contenant un liquide d'électrode de référence, et
un des capteurs (100, 150) surveille, comme objets de surveillance, un canal connecté à la bouteille (704) de diluant et un canal connecté à la bouteille (705) de liquide d'électrode de référence.
